# EUROPÄISCHE PATENTSCHRIFT

(11) **EP 3 881 572 B1**
(45) Veröffentlichungstag und Bekanntmachung des Hinweises auf die Patenterteilung: **10.01.2024**
(21) Anmeldenummer: 19805166.6
(22) Anmeldetag: 11.11.2019
(51) Int. Cl.: H04W 4/40, G01M 17/00, H04L 67/12, H04L 67/52

(54) **VORRICHTUNG UND VERFAHREN ZUR SIMULATION VON FAHRZEUG-ZU-X KOMMUNIKATION**
SYSTEM FOR VEHICLE-TO-X COMMUNICATION, AND METHOD
DISPOSITIF DE COMMUNICATION VÉHICULE-À-X ET PROCÉDÉ

(30) Priorität: 14.11.2018 US 201816190382
(43) Veröffentlichungstag der Anmeldung: 22.09.2021
(73) Patentinhaber: Continental Automotive Technologies GmbH, 30165 Hannover (DE)
(72) Erfinder: STÄHLIN, Ulrich - c/o Conti Temic microelectronic GmbH, 90411 Nürnberg (DE); MENZEL, Marc - c/o Conti Temic microelectronic GmbH, 90411 Nürnberg (DE)
(74) Vertreter: Continental Corporation
(86) Internationale Anmeldenummer: PCT/EP2019/080825
(87) Internationale Veröffentlichungsnummer: WO 2020/099299

(56) Entgegenhaltungen:
- US-A1- 2017 214 747

## Beschreibung

Die vorliegende Erfindung betrifft eine Vorrichtung zur Fahrzeug-zu-X Kommunikation gemäß Oberbegriff von Anspruch 1, ein korrespondierendes Verfahren sowie die Verwendung der Vorrichtung.

Fahrzeug-zu-X-Kommunikation befindet sich derzeit auf dem Weg zur Serieneinführung. Insbesondere ist dabei vorgesehen, dass Fahrzeuge in bestimmten Abständen oder auch bei bestimmten Ereignissen Fahrzeug-zu-X Nachrichten aussenden, welche beispielsweise Informationen über Geschwindigkeit, Position, Kurs, Beschleunigung oder besondere Ereignisse wie beispielsweise Störungen oder Notbremsmanöver umfassen. Die derzeit relevanten Standards sind IEEE802.11(p), IEEE1609, SAE 2735, SAE 2945 und ETSI ITS-G5. Zusätzlich werden aktuell neue Standards bei 3GPP für Cellular-V2X (C-V2X) erstellt.

Bei der Fahrzeug-zu-Kommunikation handelt es sich um eine kooperative Technologie. Das bedeutet, dass üblicherweise mindestens zwei zur Fahrzeug-zu-X Kommunikation geeignete Kommunikationsvorrichtungen beteiligt sein müssen, damit das kooperative System wirksam wird. Das gilt nicht nur für den vorgesehenen Einsatzbereich, sondern auch für die Erprobungsphase während der Entwicklung. Unter Laborbedingungen ist dies vergleichsweise einfach zu realisieren, da die in der Entwicklung befindlichen Kommunikationsvorrichtungen mit einem Simulator betrieben werden können. Im Fahrversuch bzw. Realverkehrssimulation ist das allerdings nicht problemlos möglich, da sich hier die in der Entwicklung befindliche Kommunikationsvorrichtung selbst bewegt und damit zumindest die Position nur vergleichsweise schwierig vorgegeben werden kann. Aufgrund der Mehrzahl abzustimmender Fahrzeuge kommt es vermehrt zu Fehlversuchen und besonders kritische Fahrmanöver werden gegebenenfalls nicht erprobt, um Beteiligte nicht zu gefährden.

Die US 2017/214747 A1 betrifft ein computerimplementiertes Verfahren zur Implementierung einer V2X-Anwendung auf einer Zielhardware mit einem Funkadapter, wobei die V2X-Anwendung mit einer graphischen Modellierungsumgebung in Form eines Blockschaltbildes modelliert wird, wobei in einer LDM-Objektliste empfangene Telematikdaten von Umgebungsobjekten erfasst sind, wobei in einer Sensor-Objektliste ermittelte Telematikdaten von Umgebungsobjekten erfasst sind, wobei ein Telematikdatenvergleichsblock durch Vergleich der LDM-Objektliste mit der Sensor-Objektliste Differenz-Umgebungsobjekte ermittelt, die nur in der Sensor-Objektliste erfasst sind, wobei für wenigstens ein Differenz-Umgebungsobjekt eine Vertretungs-V2X-Nachricht mit den Telematikdaten dieses Differenz-Umgebungsobjektes erstellt wird, wobei das Blockschaltbild in ein auf der Zielhardware ausführbares V2X-Programm übersetzt und das V2X-Programm auf die Zielhardware übertragen und dort ausgeführt wird, wobei die Vertretungs-V2X-Nachricht von der Zielhardware über den Funkadapter versendet wird.

Aufgabe der Erfindung ist es daher eine Vorrichtung und ein Verfahren bereitzustellen, mittels welchen die oben genannten Nachteile überwunden werden können.

Diese Aufgabe wird durch die Gegenstände der unabhängigen Ansprüche gelöst. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung beschreibt eine Vorrichtung zur Fahrzeug-zu-X Kommunikation umfassend eine Recheneinrichtung zur Verarbeitung von mittels Fahrzeug-zu-X Kommunikation über eine Antenne der Vorrichtung eingegangener und durch einen Eingangspfad von der Antenne an die Recheneinrichtung übertragenen Informationen, und einem Ausgangspfad zur Übertragung von mittels der Antenne auszusendender Informationen, wobei die Vorrichtung ausgebildet ist, Signale zur Simulation mittels Fahrzeug-zu-X Kommunikation eingegangener Informationen zu generieren und die Signale über den Ausgangspfad dem Eingangspfad der Vorrichtung zur Verarbeitung durch die Recheneinrichtung zuzuführen. Mit anderen Worten ist die Vorrichtung ausgestaltet Signale zur Simulation mittels Fahrzeug-zu-X Kommunikation eingegangener Informationen zu generieren und die Signale mittels der Recheneinrichtung zu verarbeiten.

Der Erfindung liegt der Gedanke zugrunde eingehende Fahrzeug-zu-X Informationen von weiteren Verkehrsteilnehmern bzw. Infrastruktureinrichtungen mittels durch die Vorrichtung selbst erzeugter Signale zu simulieren. Der für die Zuführung genutzte Eingangspfad der Vorrichtung ist zweckmäßigerweise der Eingangspfad, welcher für die Übertragung von mittels Fahrzeug-zu-X Kommunikation eingegangener Informationen Verwendung findet. Die zur Simulation vorgesehenen Signale werden somit durch die Vorrichtung selbst erzeugt und auch durch die Vorrichtung im Sinne mittels Fahrzeug-zu-X Kommunikation eingegangener Informationen selbst wieder verarbeitet. Ein Vorteil, welcher sich hierdurch ergibt ist, dass Fehlversuche bei Realverkehrssimulationen, z.B. Fahrversuchen, vermieden werden können, welche sich aus der Bewegungskoordination einer Mehrzahl an Kommunikationsteilnehmern ergeben können. Außerdem können Verkehrssituationen bzw. Fahrmanöver simuliert werden, welche aufgrund deren Gefährlichkeit für Beteiligte, nicht ausgeführt werden. Weiterhin ist es möglich die für Realverkehrssimulationen benötigte Anzahl an Verkehrsteilnehmern, insbesondere Fahrzeugen, zu reduzieren bzw. deren Einsatz gänzlich zu vermeiden. Somit brauchen nicht mehr entsprechend viele Fahrzeuge für Realsimulation verwendet und entsprechend kritische Situationen in Kauf genommen bzw. lediglich per Laborsimulation getestet zu werden. Im vorbestimmten Gebrauch einer die Vorrichtung umfassenden Einrichtung, beispielsweise der Verwendung eines die Vorrichtung umfassenden Fahrzeugs durch einen privaten Eigentümer im Straßenverkehr, kann die Vorrichtung in vorteilhafter Weise eine Selbstüberprüfung vornehmen.

Zweckmäßigerweise erfolgt die Generierung der Signale und die Verarbeitung der Signale mittels der Recheneinrichtung. Alternativ oder in Ergänzung kann jedoch die Generierung und Verarbeitung durch eine Mehrzahl an Recheneinrichtungen erfolgen.

Beispiele für einen vorteilhaften Einsatz sind das Testen von Stauregelung ("Congestion Control") mit verringerter Anzahl an Fahrzeugen, wobei alle anderen Fahrzeuge durch die Signale simulierbar sind, sowie Versuche zur Kreuzungsassistenz für Fälle kritischer Verkehrssituationen, wobei ein Fehler der Assistenzfunktion zu einer Kollision führen würde, jedoch das gefährdende Fahrzeug mittels Signal simulierbar ist.

Ein Fahrzeug kann ein Kraftfahrzeug, insbesondere ein Personenkraftfahrzeug, ein Lastkraftfahrzeug, ein Motorrad, ein Elektrokraftfahrzeug oder ein Hybridkraftfahrzeug, ein Wasserfahrzeug oder ein Luftfahrzeug sein.

Entsprechend einer Ausführungsform ist die Vorrichtung ausgestaltet aus der Verarbeitung der Signale resultierende Informationen zumindest teilweise an wenigstens eine andere Vorrichtung zur Verarbeitung zu übermitteln, insbesondere eine Vorrichtung eines anderen Fahrzeugsystems.

Entsprechend einer Weiterbildung der Vorrichtung ist mittels der Signale zumindest ein Verkehrsteilnehmer und/oder eine Infrastruktureinrichtung und/oder ein zentraler Server simulierbar. Üblicherweise kann anhand mittels Fahrzeug-zu-X Kommunikation empfangener Informationen unter anderem darauf geschlossen werden, welcher Natur ein Absender dieser eingegangenen Informationen bzw. Fahrzeug-zu-X Nachricht ist. In diesem Sinne sei somit verstanden, dass Verkehrsteilnehmer und/oder Infrastruktureinrichtung und/oder zentraler Server mittels der generierten Informationen simulierbar sind. In vorteilhafter Weise lassen sich somit vergleichsweise einfache Verkehrssituation bis hin zu vergleichsweise komplexen Verkehrssituationen darstellen.

Entsprechend einer Ausführungsform ist die Vorrichtung ausgestaltet mittels der Signale durch Fahrzeug-zu-X Kommunikation eingegangene Informationen eines Verkehrsteilnehmers und/oder einer Infrastruktureinrichtung und/oder eines zentralen Servers zu simulieren. Mit anderen Worten ist die Vorrichtung ausgestaltet Signale zu erzeugen, welche eine Simulation zumindest eines Verkehrsteilnehmers und/oder einer Infrastruktureinrichtung und/oder eines zentralen Servers ermöglichen. Unter Verkehrsteilnehmer seien hierbei beispielsweise Fahrzeuge oder Personen verstanden, welche Einrichtungen zur Fahrzeug-zu-X Kommunikation aufweisen bzw. mit sich führen.

Mittels der Signale ist zweckmäßigerweise zumindest eine Verarbeitungsstufe eingegangener Fahrzeug-zu-X Nachrichten simulierbar. Beispielsweise kann vorgesehen sein mittels der Signale zumindest eine Verarbeitungsstufe einer Fahrzeug-zu-X Nachricht entsprechend eines Fahrzeug-zu-X Kommunikationsprotokollstapels zu simulieren. Dies betrifft im wesentlichen unverarbeitete Fahrzeug-zu-X Nachrichten, wie sie üblicherweise unmittelbar an einem Eingang eines Protokollstapels nach Empfang der Nachricht mittels einer Antenne vorliegen, sämtliche Verarbeitungsstufen der Nachricht der einzelnen Schichten des Protokollstapels bis zu den von der Nachricht umfassten extrahierten und ggf. bereits separierten Informationen, welche insbesondere zur Erfassung der Verkehrssituation den Sender betreffenden relevant sind.

Entsprechend einer Weiterbildung ist die Vorrichtung ausgestaltet mittels der Signale von einem Verkehrsteilnehmer und/oder einer Infrastruktureinrichtung und/oder einem zentralen Server übertragene Informationen eine Geschwindigkeit, Position, Kurs, Beschleunigung und/oder Ereignis betreffend, insbesondere Störungen bzw. Warnhinweise, zu simulieren. Zweckmäßigerweise können mittels der Signale verwendete Fahrzeug-zu-X Kommunikationsstandards abgebildet werden, wie beispielsweise IEEE802.11(p), IEEE1609, SAE 2735, SAE 2945, ETSI ITS-G5 und/oder Standards für Cellular-V2X.

Entsprechend einer Ausführungsform ist die Vorrichtung in der Weise ausgestaltet, dass die Signale dem Eingangspfad funktionell zwischen einer Antenne der Vorrichtung und der Recheneinrichtung zuführbar sind. Insbesondere wenn der Kommunikationsprotokollstapel mittels einer weiteren Recheneinrichtung realisiert ist bzw. ausgeführt wird, können unmittelbar die durch ansonsten üblicherweise eingehende Fahrzeug-zu-X Nachrichten umfassten Informationen dem Eingangspfad zur Verarbeitung durch die Recheneinrichtung zugeführt werden. Die weitere Recheneinrichtung kann beispielsweise durch die Antenne (z.B. intelligente Antenne), einen Kompensator und/oder durch eine die Recheneinrichtung und die weitere Recheneinrichtung umfassende elektronische Kontrolleinheit zur Fahrzeug-zu-X Kommunikation (ECU) umfasst sein, wobei die Recheneinrichtung und die weitere Recheneinrichtung auch als gemeinsame Recheneinrichtung realisierbar sind, z.B. als integrierter Schaltkreis.

Die elektronische Kontrolleinheit kann demnach zweckmäßigerweise ebenfalls durch die Vorrichtung zur Fahrzeug-zu-X Kommunikation umfasst sein.

Weiterbildungsgemäß ist die Vorrichtung ausgestaltet, die Signale als Radio Frequenz Signale (RF-Signale) bereitzustellen. Ist die elektronische Kontrolleinheit, welche zumindest die Recheneinrichtung umfasst, beispielsweise ausgestaltet von der Antenne bzw. einem Kompensator Radio Frequenz Signale zu empfangen und zu verarbeiten, können die Signale in vorteilhafter Weise somit in den von der elektronischen Kontrolleinrichtung umfassten Teil des Radio Frequenz Eingangspfades eingekoppelt werden. Alternativ oder in Ergänzung können die generierten Signale auch in anderer, beispielsweise digitalisierter, Beschaffenheit ausgestaltet sein und einem zur Verarbeitung dieser Beschaffenheit geeigneten Teil des Eingangspfads zur Verarbeitung eingehender Fahrzeug-zu-X Nachrichten zugeführt werden.

Weiterbildungsgemäß können für die generierten Signale zumindest Teile eines ansonsten für die Generation, Verarbeitung und internen Übertragung von mittels einer Antenne auszusendender Fahrzeug-zu-X Nachrichten bzw. davon umfasster Informationen vorgesehenen Ausgangspfades herangezogen werden. Somit brauchen lediglich eigentlich auszusendende Informationen bzw. auszusendende Fahrzeug-zu-X Nachrichten mit zu simulierendem Inhalt erzeugt und der Recheneinrichtung zur Verarbeitung zugeführt werden. Dadurch ergibt sich ein geringer Mehraufwand zur Realisierung.

Entsprechend einer Ausführungsform ist die Vorrichtung ausgestaltet einen Vergleich von anhand der generierten Signale erwarteter Ergebnisse mit durch die Verarbeitung durch die Vorrichtung tatsächlich ermittelten Ergebnissen vorzunehmen.

Somit wird eine vorrichtungsinterne Selbstüberprüfung realisiert. Werden dabei die Ergebnisse der Verarbeitung der simulierten Verkehrssituation durch die Vorrichtung an zumindest ein weiteres System der zugrundeliegenden Einrichtung ausgegeben, ist ebenso eine Reaktion dieses Systems überprüfbar. In dieser Weise lässt sich eine Überprüfung sämtlicher in Abhängigkeit der simulierten Verkehrssituation beteiligter Systeme der zugrundeliegenden Einrichtung realisieren.

Weiterbildungsgemäß ist die Vorrichtung ausgestaltet die simulierten Informationen abhängig von einer Eigenbewegung der Vorrichtung auszubilden. In vorteilhafter Weise ergibt sich somit eine simulierte Verkehrssituation unter Berücksichtigung der Eigenbewegung der Vorrichtung bzw. einer die Vorrichtung umfassenden Einrichtung. Insbesondere die simulierten Verkehrsteilnehmer sind somit in ihrer Position und/oder Bewegung in der Weise simulierbar, dass die Verkehrssituation genau so entsteht, wie es für die Prüfung, beispielsweise einen Fahrtest, vorgesehen ist.

Entsprechend einer Ausführungsform sind die simulierten Informationen abhängig von einer örtlichen und/oder zeitlichen Vorgabe ausbildbar. Somit kann beispielsweise ein örtlicher und/oder zeitlicher Versatz bis zum Start einer Simulation bzw. jeweiliger Verkehrssituationen realisierbar sein. Beispielsweise kann ein Bewegungsverlauf bzw. eine Trajektorie zumindest eines weiteren Verkehrsteilnehmers vorgebbar ausgestaltet sein und beim Passieren einer vorgebbaren Triggerposition durch die Vorrichtung bzw. die Vorrichtung umfassenden Einrichtung, z.B. ein Fahrzeug, kann die Vorrichtung ausgestaltet sein, die Simulation eines entsprechend vorgegebenen simulierten Verkehrsteilnehmers oder mehrerer Verkehrsteilnehmer zu starten. Entsprechendes ist mittels eines Triggerzeitpunkts bzw. Zeitdauer realisierbar. Zum Beispiel kann der Start einer Simulation eines zu simulierenden Verkehrsteilnehmers nach 10s Fahrzeit eines Fahrzeugs, welches die Vorrichtung umfasst, vorgesehen sein. Die Erkennung der Triggerposition erfolgt dabei zweckmäßigerweise mittels eines globalen Satellitennavigationssystems, sodass auch die Triggerposition in entsprechenden Koordinaten vorgebbar ist.

Entsprechend einer Ausführungsform ist die Vorrichtung ausgestaltet die simulierten Informationen abhängig von mittels Fahrzeug-zu-X Kommunikation tatsächlich empfangenen Informationen auszubilden. Die tatsächlich empfangenen Fahrzeug-zu-X Nachrichten sind dementsprechend zumindest nicht durch die Vorrichtung selbst simuliert. Aussender dieser Fahrzeug-zu-X Nachrichten können zumindest ein realer Verkehrsteilnehmer, Infrastruktureinrichtung und/oder zentraler Server sein. Diese müssen nicht notwendigerweise auch diesbezügliche Nachrichteninhalte aussenden. Beispielsweise ist zumindest teilweise die Simulation einer Verkehrssituation mittels eines zentralen Servers realisierbar, welcher die Fahrzeug-zu-X Nachrichten zumindest eines Verkehrsteilnehmers, Infrastruktureinrichtung und/oder zentralen Servers simuliert.

Entsprechend einer weiteren Ausführungsform die Vorrichtung ausgestaltet ist mittels Fahrzeug-zu-X Kommunikation empfangene Informationen um einen vorgebbaren örtlichen und/oder zeitlichen Versatz zu verändern. Mit anderen Worten ist die Vorrichtung ausgestaltet die mittels Fahrzeug-zu-X Kommunikation empfangene Informationen zu einem zeitlich versetzten Zeitpunkt bzw. einer örtlich versetzten Position für die Simulation von Verkehrssituationen heranzuziehen. Alternativ oder in Ergänzung kann insbesondere im Rahmen einer Weiterbildung des Verfahrens gemäß der Erfindung der örtliche und/oder zeitliche Versatz der Bereitstellung, also des Aussendens und dem entsprechend des Empfangs, der Fahrzeug-zu-X Nachrichten realisiert werden. Insbesondere sicherheitsrelevant im Falle realer Verkehrsteilnehmer können somit in vorteilhafter Weise Bewegungsvorgänge eines aussendenden Verkehrsteilnehmers von der empfangenden Vorrichtung örtlich und/oder zeitlich unabhängiger erfolgen. Eine Aufzeichnung von Informationen und eine Bereitstellung an die Vorrichtung sind somit örtlich bzw. zeitlich entkoppelt, was die Flexibilität erheblich steigert. Zweckmäßigerweise erfolgt bei einem zeitlichen Versatz nach dem Bewegungsvorgang und vor dem Aussenden eine Datenspeicherung zur Realisierung des zeitlichen Versatzes.

Weiterhin beschreibt die Erfindung ein Verfahren aufweisend die Schritte:
- Erzeugen, mittels einer Vorrichtung zur Fahrzeug-zu-X Kommunikation, von Signalen zur Simulation von mittels Fahrzeug-zu-X Kommunikation eingegangener Informationen,
- Zuführen der Signale an eine Recheneinrichtung der Vorrichtung über einen Ausgangspfad zur Übertragung von mittels einer Antenne der Vorrichtung auszusendenden Informationen und einen Eingangspfad zur Übertragung von mittels der Antenne empfangenen Informationen, wofür die Signale über den Ausgangspfad dem Eingangspfad zugeführt werden; und
- Verarbeiten der Signale durch die Recheneinrichtung.

Aus der Anwendung des Verfahrens ergeben sich ebenso die bereits im vorhergehenden erläuterten Vorteile wenigstens einer Ausführungsform der Vorrichtung gemäß der Erfindung.

Entsprechend einer Ausführungsform übermittelt, insbesondere mittels eines Datenbusses, die Vorrichtung aus der Verarbeitung der Signale resultierende Informationen zumindest teilweise an wenigstens eine andere Vorrichtung zur Verarbeitung, insbesondere ein anderes Fahrzeugsystem, z.B. ein Fahrerassistenzsystem. Weitere Ausführungsformen des Verfahrens ergeben sich aus den Ausbildungsvarianten der beschriebenen Vorrichtung.

Gemäß einem weiteren Aspekt der Erfindung ist die Vorrichtung eingerichtet, ein Verfahren nach wenigstens einem der vorstehenden Ausführungsformen durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Einige besonders vorteilhafte Ausgestaltungen der Erfindung sind in den Unteransprüchen angegeben. Weitere bevorzugte Ausführungsformen ergeben sich auch aus der nachfolgenden Beschreibung von Ausführungsbeispielen an Hand von Figuren.

Es zeigen:
- Fig. 1: eine beispielsgemäße Ausführungsform der Vorrichtung gemäß der Erfindung anhand eines Blockschaltbildes und
- Fig. 2: beispielsgemäße Ausführungsform des Verfahrens gemäß der Erfindung anhand eines Ablaufdiagramms.

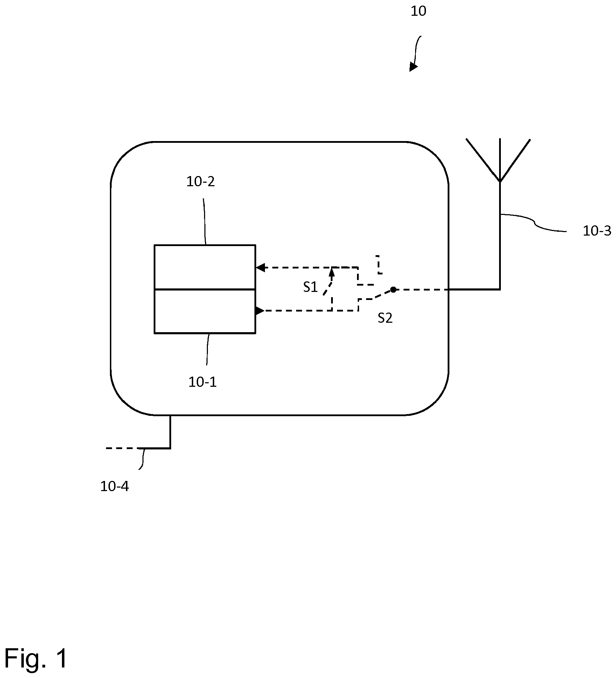

Die Fig. 1 zeigt eine beispielsgemäße Ausführungsform der Vorrichtung 10 zur Fahrzeug-zu-X Kommunikation gemäß der Erfindung anhand eines Blockschaltbildes. Die Vorrichtung 10 ist ausgestaltet mittels einer Recheneinrichtung 10-1 Signale zur Simulation mittels Fahrzeug-zu-X Kommunikation eingegangener Informationen zu generieren und die Signale mittels einer Recheneinrichtung 10-2 zu verarbeiten. Grundsätzlich ist die Vorrichtung 10 zur Verarbeitung von durch Fahrzeug-zu-X Kommunikation über Antenne 10-3 eingegangener Informationen mittels Recheneinrichtung 10-2 ausgestaltet. Ebenfalls in vereinfachter Weise im Blockschaltbild der Fig. 1 dargestellt, ist ein Ausgangspfad zur Übertragung mittels Antenne 10-3 auszusendender Informationen von Recheneinrichtung 10-1 zu Antenne 10-3 sowie ein Eingangspfad zur Übertragung mittels Antenne 10-3 eingegangener Informationen von Antenne 10-3 zu Recheneinrichtung 10-2 zur Verarbeitung eingegangener Fahrzeug-zu-X Nachrichten. Eingang- sowie Ausgangspfad sind durch entsprechende Richtungspfeile veranschaulicht. Ein Umschalten zwischen Eingangspfad und Ausgangspfad kann mittels Schalteinrichtung S2 vorgenommen werden, wobei im Falle des gewünschten Aussendens der Ausgangspfad zur Antenne verbindbar ist und im Falle des beabsichtigten Empfangens der Eingangspfad. Zur Übertragung von mittels Recheneinrichtung 10-1 generierter Signale zur Simulation mittels Fahrzeug-zu-X Kommunikation eingegangener Informationen und Verarbeitung mittels Recheneinrichtung 10-2 weist Vorrichtung 10 weiterhin einen Signalübertragungspfad zwischen dem Ausgangspfad und dem Eingangspfad auf, welcher eine Schalteinrichtung S1 umfasst. Ermöglicht die Schalteinrichtung S1 im geschlossenen Zustand die Signalübertragung werden die von der Recheneinrichtung 10-1 generierten Informationen der Recheneinrichtung 10-2 über den Eingangspfad zugeführt. Um zu vermeiden, dass in diesem Fall die generierten Informationen mittels Antenne 10-3 ausgesandt werden, kann für Schalteinrichtung S2 ein dritter Schaltzustand vorgesehen sein, durch welchen zweckmäßigerweise eine Signalübertragung zwischen den Recheneinrichtungen 10-1 und 10-2 zu/von Antenne 10-3 unterbunden werden kann. In Fig. 1 ist dieser dritte Schaltzustand durch einen unverbundenen Schaltzustandskontakt repräsentiert. Alternativ kann beispielsweise jedoch auch vorgesehen sein parallel eine Informationsübertragung und entsprechend Aussendung mittels Antenne 10-3 zuzulassen, um die generierten Informationen zum Beispiel extern überwachen zu können. Die mittels Recheneinrichtung 10-2 verarbeiteten simulierten Informationen sind mittels Datenbus 10-4 anderen nicht in Fig. 1 dargestellten Vorrichtungen bzw. Systemen, insbesondere Fahrzeugsystemen, zuführbar.

Alternativ oder in Ergänzung kann gemäß einer nicht dargestellten Ausführungsform insbesondere zwischen S1 und S2 ein Richtkoppler vorgesehen sein, um ein Aussenden mittels Recheneinrichtung 10-1 über die Antenne 10-3 zu verhindern. In diesem Fall kann auf einen dritten Schaltzustand von Schalteinrichtung S2 verzichtet werden.

Weiterhin alternativ oder in Ergänzung kann entsprechend einer nicht dargestellten Ausführungsform ein Mischer vorgesehen sein, um Signale von Recheneinrichtung 10-1 und empfangene Signale von Antenne 10-3 zu kombinieren, bevor diese Recheneinrichtung 10-2 zugeführt werden.

Alternativ kann Antenne 10-3 auch ausschließlich mit Recheneinrichtung 10-1 verbunden sein, wobei von Antenne 10-3 empfangene Fahrzeug-zu-X Nachrichten an Recheneinrichtung 10-1 übermittelt und in der Recheneinrichtung 10-1 mit den simulierten Informationen, beispielsweise digital, kombiniert werden können. Anschließend können diese durch Recheneinrichtung 10-1 an Recheneinrichtung 10-2 auf analoger oder digitaler Ebene übermittelt werden. Hierzu kann ein Zirkulator auf analoger Ebene zwischen Antenne 10-3, Recheneinrichtung 10-1 und Recheneinrichtung 10-2 verwendet werden, um die Rückwirkungen der Einheiten zueinander zu vermeiden.

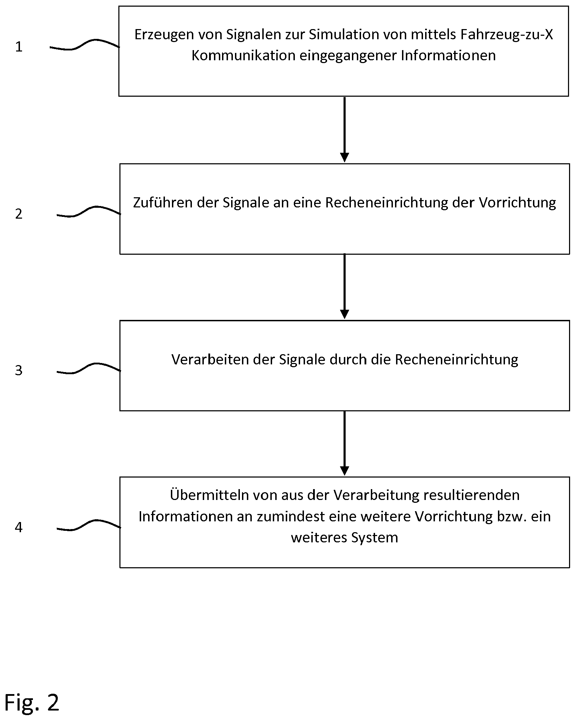

Die Fig. 2 zeigt eine beispielsgemäße Ausführungsform des Verfahrens gemäß der Erfindung anhand eines Ablaufdiagramms. In einem Schritt 1 erfolgt dabei die Erzeugung von Signalen zur Simulation von mittels Fahrzeug-zu-X Kommunikation eingegangener Informationen durch eine Vorrichtung zur Fahrzeug-zu-X Kommunikation. Diese Signale werden in einem Schritt 2 einer Recheneinrichtung der Vorrichtung zugeführt, welche in einem Schritt 3 die Verarbeitung der Signale vornimmt. Anschließend kann in einem Schritt 4 eine Übermittlung von aus der Verarbeitung resultierenden Informationen an zumindest eine weitere Vorrichtung bzw. ein weiteres System beispielsweise eines Fahrzeugs erfolgen.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

Allgemein sei darauf hingewiesen, dass unter Fahrzeug-zu-X Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug Kommunikation, um Fahrzeug-zu-Infrastruktur oder Fahrzeug-zu-Person Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X Kommunikation unter Verwendung der Standards IEEE 802.11p oder IEEE 1609.4 erfolgen. Eine Fahrzeug-zu-X Kommunikation kann auch als C2X-Kommunikation oder V2X-Kommunikation bezeichnet werden. Die Teilbereiche können als C2C (Car-to-Car), V2V (Vehicle-to-Vehicle) oder C2I (Car-to-Infrastructure), V2I (Vehicle-to-Infrastrukture) bezeichnet werden. Die Erfindung schließt jedoch Fahrzeug-zu-X Kommunikation mit Vermittlung beispielsweise über ein Mobilfunknetz explizit nicht aus.

## Patentansprüche

1. Vorrichtung (10) zur Fahrzeug-zu-X Kommunikation, wobei die Vorrichtung (10) eingerichtet ist, in einem Fahrzeug eingebaut zu werden, umfassend:
- eine Recheneinrichtung (10-2) zur Verarbeitung von mittels Fahrzeug-zu-X Kommunikation über eine Antenne (10-3) der Vorrichtung (20) eingegangener und durch einen Eingangspfad von der Antenne (10-3) an die Recheneinrichtung (10-2) übertragenen Informationen, und
- einen Ausgangspfad zur Übertragung von mittels der Antenne (10-3) auszusendender Informationen, **dadurch gekennzeichnet, dass**
die Vorrichtung (10) ausgestaltet ist, mittels einer zweiten Recheneinrichtung (10-1) Signale zur Simulation mittels Fahrzeug-zu-X Kommunikation eingegangener Informationen zu generieren und die generierten Signale über den Ausgangspfad dem Eingangspfad der Vorrichtung (10) zur Verarbeitung durch die Recheneinrichtung (10-2) zuzuführen, wobei die Vorrichtung des Weiteren umfasst:
- eine erste Schalteinrichtung (S1), die auf einem Signalübertragungspfad zwischen dem Ausgangspfad und dem Eingangspfad umfasst ist und die im geschlossenen Zustand eingerichtet ist, die generierten Signale dem Eingangspfad der Vorrichtung (10) zur Verarbeitung durch die Recheneinrichtung (10-2) zuzuführen, und
- eine zweite Schalteinrichtung (S2) mit drei Schaltzuständen, die eingerichtet ist, um in einem ersten Schaltzustand die Antenne (10-3) mit der Recheneinrichtung (10-2) zu verbinden, in einem zweiten Schaltzustand die Antenne (10-3) mit der zweiten Recheneinrichtung (10-1) zu verbinden, und in einem dritten Schaltzustand die Antenne (10-3) weder mit der Recheneinrichtung (10-2) noch mit der zweiten Recheneinrichtung (10-1) verbindet.

2. Vorrichtung gemäß dem vorhergehenden Anspruch, **dadurch gekennzeichnet, dass** aus der Verarbeitung der Signale resultierende Informationen zumindest teilweise an wenigstens eine andere Vorrichtung zur Verarbeitung übermittelbar sind.

3. Vorrichtung gemäß zumindest einem der vorhergehenden Ansprüche, **dadurch gekennzeichnet, dass** mittels der Signale zumindest ein Verkehrsteilnehmer und/oder eine Infrastruktureinrichtung und/oder ein zentraler Server simulierbar ist.

4. Vorrichtung gemäß zumindest einem der vorhergehenden Ansprüche, **dadurch gekennzeichnet, dass** mittels der Signale durch Fahrzeug-zu-X Kommunikation eingegangene Informationen eines Verkehrsteilnehmers und/oder einer Infrastruktureinrichtung und/oder eines zentralen Servers simulierbar sind.

5. Vorrichtung gemäß zumindest einem der vorhergehenden Ansprüche, **dadurch gekennzeichnet, dass** mittels der Signale zumindest eine Verarbeitungsstufe eingegangener Fahrzeug-zu-X Nachrichten simulierbar ist.

6. Vorrichtung gemäß zumindest einem der vorhergehenden Ansprüche, **dadurch gekennzeichnet, dass** mittels der Signale von einem Verkehrsteilnehmer und/oder einer Infrastruktureinrichtung und/oder einem zentralen Server übertragene Informationen eine Geschwindigkeit, Position, Kurs, Beschleunigung und/oder Ereignis betreffend simulierbar sind.

7. Vorrichtung gemäß zumindest einem der vorhergehenden Ansprüche, **dadurch gekennzeichnet, dass** die Signale dem Eingangspfad funktionell zwischen einer Antenne der Vorrichtung und der Recheneinrichtung zuführbar sind.

8. Vorrichtung gemäß zumindest einem der vorhergehenden Ansprüche, **dadurch gekennzeichnet, dass** die Signale als Radio Frequenz Signale ausgestaltbar sind.

9. Vorrichtung gemäß zumindest einem der vorhergehenden Ansprüche, **dadurch gekennzeichnet, dass** zumindest ein Teil eines Ausgangspfads der Vorrichtung, welcher zum Aussenden von Informationen mittels Fahrzeug-zu-X Kommunikation geeignet ist, für die Zuführung der Signale zu dem Eingangspfad heranziehbar ist.

10. Vorrichtung gemäß zumindest einem der vorhergehenden Ansprüche, **dadurch gekennzeichnet, dass** die Vorrichtung ausgestaltet ist einen Vergleich von anhand der Signale erwarteter Ergebnisse mit tatsächlich ermittelten Ergebnissen vorzunehmen.

11. Vorrichtung gemäß zumindest einem der vorhergehenden Ansprüche, **dadurch gekennzeichnet, dass** die simulierten Informationen abhängig von einer Eigenbewegung der Vorrichtung ausbildbar sind.

12. Vorrichtung gemäß zumindest einem der vorhergehenden Ansprüche, **dadurch gekennzeichnet, dass** die simulierten Informationen abhängig von mittels Fahrzeug-zu-X Kommunikation tatsächlich empfangenen Informationen ausbildbar sind.

13. Vorrichtung gemäß zumindest einem der vorhergehenden Ansprüche, **dadurch gekennzeichnet, dass** die simulierten Informationen abhängig von einer örtlichen und/oder zeitlichen Vorgabe ausbildbar sind.

14. Vorrichtung gemäß zumindest einem der vorhergehenden Ansprüche, **dadurch gekennzeichnet, dass** die Vorrichtung ausgestaltet ist mittels Fahrzeug-zu-X Kommunikation empfangene Informationen um einen vorgebbaren örtlichen und/oder zeitlichen Versatz zu verändern.

15. Verfahren aufweisend die Schritte:
- Erzeugen, mittels einer Vorrichtung (10) zur Fahrzeug-zu-X Kommunikation gemäß eines der vorhergehenden Ansprüche, von Signalen zur Simulation von mittels Fahrzeug-zu-X Kommunikation eingegangener Informationen (1),
- Zuführen der Signale an eine Recheneinrichtung der Vorrichtung (2) über einen Ausgangspfad zur Übertragung von mittels einer Antenne der Vorrichtung auszusendenden Informationen und einen Eingangspfad zur Übertragung von mittels der Antenne empfangenen Informationen, wofür die Signale über den Ausgangspfad via einer Schalteinheit (S1) im geschlossenen Zustand dem Eingangspfad zugeführt werden, wobei in diesem Fall die Signalübertragung von der Vorrichtung (10) zur Antenne durch einen dritten Schaltzustand einer zweiten Schalteinheit (10-1) unterbunden wird; und
- Verarbeiten der Signale durch die Recheneinrichtung (3).

16. Verwendung der Vorrichtung (10) gemäß einem der Ansprüche 1 bis 14 in einem Fahrzeug.

## Claims

1. Apparatus (10) for vehicle-to-X communication, wherein the apparatus (10) is configured to be installed in a vehicle, comprising:
- a computing device (10-2) for processing information received by means of vehicle-to-X communication via an antenna (10-3) of the apparatus (20) and transmitted from the antenna (10-3) to the computing device (10-2) by means of an input path, and
- an output path for transmitting information to be emitted by means of the antenna (10-3), **characterized in that**
the apparatus (10) is configured to generate signals for simulating information received by means of vehicle-to-X communication using a second computing device (10-1) and to supply the generated signals to the input path of the apparatus (10) via the output path for processing by the computing device (10-2),
wherein the apparatus also comprises:
- a first switching device (S1) which is included on a signal transmission path between the output path and the input path and, in the closed state, is configured to supply the generated signals to the input path of the apparatus (10) for processing by the computing device (10-2), and
- a second switching device (S2) having three switching states, which is configured to connect the antenna (10-3) to the computing device (10-2) in a first switching state, to connect the antenna (10-3) to the second computing device (10-1) in a second switching state, and to connect the antenna (10-3) neither to the computing device (10-2) nor to the second computing device (10-1) in a third switching state.

2. Apparatus according to the preceding claim, **characterized in that** information resulting from the processing of the signals can be at least partially transmitted to at least one other apparatus for processing.

3. Apparatus according to at least one of the preceding claims, **characterized in that** at least one road user and/or an infrastructure device and/or a central server can be simulated by means of the signals.

4. Apparatus according to at least one of the preceding claims, **characterized in that** information relating to a road user and/or an infrastructure device and/or a central server that is received by means of vehicle-to-X communication can be simulated by means of the signals.

5. Apparatus according to at least one of the preceding claims, **characterized in that** a processing stage of received vehicle-to-X messages can be simulated by means of the signals.

6. Apparatus according to at least one of the preceding claims, **characterized in that** information relating to a speed, position, course, acceleration and/or event, which is transmitted by a road user and/or an infrastructure device and/or a central server, can be simulated by means of the signals.

7. Apparatus according to at least one of the preceding claims, **characterized in that** the signals can be supplied to the input path functionally between an antenna of the apparatus and the computing device.

8. Apparatus according to at least one of the preceding claims, **characterized in that** the signals can be in the form of radio frequency signals.

9. Apparatus according to at least one of the preceding claims, **characterized in that** at least one part of an output path of the apparatus, which is suitable for emitting information by means of vehicle-to-X communication, can be used to supply the signals to the input path.

10. Apparatus according to at least one of the preceding claims, **characterized in that** the apparatus is configured to compare results expected on the basis of the signals with actually determined results.

11. Apparatus according to at least one of the preceding claims, **characterized in that** the simulated information can be formed on the basis of the apparatus's own movement.

12. Apparatus according to at least one of the preceding claims, **characterized in that** the simulated information can be formed on the basis of information actually received by means of vehicle-to-X communication.

13. Apparatus according to at least one of the preceding claims, **characterized in that** the simulated information can be formed on the basis of a local and/or temporal specification.

14. Apparatus according to at least one of the preceding claims, **characterized in that** the apparatus is configured to change information received by means of vehicle-to-X communication by a predefinable local and/or temporal offset.

15. Method having the steps of:
- using an apparatus (10) for vehicle-to-X communication according to one of the preceding claims to generate signals for simulating information (1) received by means of vehicle-to-X communication,
- supplying the signals to a computing device of the apparatus (2) via an output path for transmitting information to be emitted by means of an antenna of the apparatus and an input path for transmitting information received by means of the antenna, for which purpose the signals are supplied to the input path via the output path via a switching unit (S1) in the closed state, wherein, in this case, the transmission of signals from the apparatus (10) to the antenna is prevented by a third switching state of a second switching unit (10-1); and
- processing the signals by means of the computing device (3).

16. Use of the apparatus (10) according to one of Claims 1 to 14 in a vehicle.

## Revendications

1. Arrangement (10) de communication de véhicule avec tout, l'arrangement (10) étant conçu pour être installé dans un véhicule, comprenant :
- un dispositif de calcul (10-2) destiné à traiter des informations reçues au moyen de la communication de véhicule avec tout par le biais d'une antenne (10-3) de l'arrangement (20) et transmises de l'antenne (10-3) au dispositif de calcul (10-2) par un chemin d'entrée, et
- un chemin de sortie destiné à la transmission d'informations à émettre au moyen de l'antenne (10-3), **caractérisé en ce que**
l'arrangement (10) est configuré pour, au moyen d'un deuxième dispositif de calcul (10-1), générer des signaux destinés à la simulation d'informations reçues au moyen de la communication de véhicule avec tout et acheminer les signaux générés au chemin d'entrée de l'arrangement (10) par le biais du chemin de sortie en vue de leur traitement par le dispositif de calcul (10-2), l'arrangement comportant en outre :
- un premier dispositif de commutation (S1), qui est compris sur un chemin de transmission de signal entre le chemin de sortie et le chemin d'entrée et qui, à l'état fermé, est conçu pour acheminer les signaux générés au chemin d'entrée de l'arrangement (10) en vue de leur traitement par le dispositif de calcul (10-2), et
- un deuxième dispositif de commutation (S2) comprenant trois états de commutation, lequel est conçu pour, dans un premier état de commutation, relier l'antenne (10-3) au dispositif de calcul (10-2), dans un deuxième état de commutation, relier l'antenne (10-3) au deuxième dispositif de calcul (10-1), et qui, dans un troisième état de commutation, ne relie l'antenne (10-3) ni au dispositif de calcul (10-2), ni au deuxième dispositif de calcul (10-1).

2. Arrangement selon la revendication précédente, **caractérisé en ce que** les informations résultant du traitement des signaux peuvent être communiquées au moins partiellement à un autre arrangement en vue de leur traitement.

3. Arrangement selon au moins l'une des revendications précédentes, **caractérisé en ce qu'**au moins un acteur du trafic et/ou un dispositif d'infrastructure et/ou un serveur central peut être simulé au moyen des signaux.

4. Arrangement selon au moins l'une des revendications précédentes, **caractérisé en ce que** des informations reçues au moyen de la communication de véhicule avec tout d'un acteur du trafic et/ou d'un dispositif d'infrastructure et/ou d'un serveur central peuvent être simulées au moyen des signaux.

5. Arrangement selon au moins l'une des revendications précédentes, **caractérisé en ce qu'**au moins une étape de traitement de messages de véhicule avec tout reçus peut être simulée au moyen des signaux.

6. Arrangement selon au moins l'une des revendications précédentes, **caractérisé en ce que** des informations concernant une vitesse, une position, une trajectoire, une accélération et/ou un événement transmises par un acteur du trafic et/ou un dispositif d'infrastructure et/ou un serveur central peuvent être simulées au moyen des signaux.

7. Arrangement selon au moins l'une des revendications précédentes, **caractérisé en ce que** les signaux peuvent être acheminés au chemin d'entrée fonctionnellement entre une antenne de l'arrangement et le dispositif de calcul.

8. Arrangement selon au moins l'une des revendications précédentes, **caractérisé en ce que** les signaux peuvent être configurés en tant que signaux à radiofréquence.

9. Arrangement selon au moins l'une des revendications précédentes, **caractérisé en ce qu'**au moins une partie d'un chemin de sortie de l'arrangement, laquelle est adaptée pour l'émission d'informations au moyen de la communication de véhicule avec tout, peut être sollicitée pour l'acheminement des signaux au chemin d'entrée.

10. Arrangement selon au moins l'une des revendications précédentes, **caractérisé en ce que** l'arrangement est configuré pour effectuer une comparaison entre des résultats attendus à l'aide des signaux et des résultats effectivement déterm inés.

11. Arrangement selon au moins l'une des revendications précédentes, **caractérisé en ce que** les informations simulées peuvent être formées en fonction d'un mouvement propre de l'arrangement.

12. Arrangement selon au moins l'une des revendications précédentes, **caractérisé en ce que** les informations simulées peuvent être formées en fonction d'informations effectivement reçues au moyen de la communication de véhicule avec tout.

13. Arrangement selon au moins l'une des revendications précédentes, **caractérisé en ce que** les informations simulées peuvent être formées en fonction d'une consigne spatiale et/ou temporelle.

14. Arrangement selon au moins l'une des revendications précédentes, **caractérisé en ce que** l'arrangement est configuré pour modifier les informations reçues au moyen de la communication de véhicule avec tout d'un décalage spatial et/ou temporel pouvant être prédéfini.

15. Procédé comprenant les étapes suivantes :
- génération, au moyen d'un arrangement (10) de communication de véhicule avec tout selon l'une des revendications précédentes, de signaux destinés à la simulation d'informations (1) reçues au moyen de la communication de véhicule avec tout,
- acheminement des signaux à un dispositif de calcul de l'arrangement (2) par le biais d'un chemin de sortie en vue de la transmission d'informations à émettre au moyen d'une antenne de l'arrangement et d'un chemin d'entrée en vue de la transmission d'informations reçues au moyen de l'antenne, ce pour quoi les signaux sont acheminés au chemin d'entrée par le biais du chemin de sortie au travers d'une unité de commutation (S1) à l'état fermé, la transmission de signal de l'arrangement (10) vers l'antenne étant dans ce cas inhibée par un troisième état de commutation d'une deuxième unité de commutation (10-1) ; et
- traitement des signaux par le dispositif de calcul (3).

16. Utilisation de l'arrangement (10) selon l'une des revendications 1 à 14 dans un véhicule.
